# EUROPEAN PATENT APPLICATION

(11) **EP 1 061 456 A2**
(43) Date of publication of application: **20.12.2000**
(21) Application number: 00112792.7
(22) Date of filing: 16.06.2000
(51) Int. Cl.: G06F 17/30

(54) **A conversion apparatus for converting an HTML document to an MHEG document**

(30) Priority: 18.06.1999 JP 17291199
(71) Applicant: NEC CORPORATION, Tokyo (JP)
(72) Inventor: Hatayama, Akemi, c/o NEC Corporation, Tokyo (JP)
(74) Representative: Glawe, Delfs, Moll & Partner

(57) **Abstract**

A conversion apparatus for converting an HTML document to an MHEG document, wherein the conversion apparatus comprising a conversion means for converting an HTML document having one or more tags, stylesheet coding, or scripts to an MHEG document having one or more objects.

## Description

### BACKGROUND OF THE INVENTION

### 1. Field of the Invention

The present invention relates to a conversion apparatus for converting an HTML (Hypertext Markup Language) document to an MHEG (Multimedia and Hypermedia Expert Group) document, and more particularly to a conversion apparatus for converting a single object of the HTML document to a plurality of objects of the MHEG document

### 2. Background of the Invention

With the start of digital broadcasting, data broadcasting is also gradually starting. The DAVIC (Digital Audio-Visual Council) has adopted MHEG-5 as a standard for data broadcasting. MHEG is a standard for the interchange for the representation of multimedia information objects and hypermedia information objects, and is a standard of the ISO/IEC (International Organization for Standardization / International Electrotechnical Commission) and the ITU (International Telecommunication Union). An MHEG document is coded using ASN1 (Abstract Syntax Notation Version 1), which is an ISO standard, and converted to binary codes.

On the Internet, HTML 4.0 is the standard for coding web pages.

Although MHEG and HTML documents were in the past assumed to be used separately, with increased capability of expression on the Web, there is an increasing need for the ability to mutually use these two contents.

The MHEG-5 is functionally similar to a combination of HTML 4.0, CSS (cascading style sheets), and JavaScript (herein referred to as the HTML 4.0 set), however, the HTML 4.0 set has functions which cannot directly be converted to MHEG-5.

When one considers the interchangeability of broadcast content on the Web in the future, it will be necessary to develop a conversion apparatus or a conversion software for converting the HTML documents to the MHEG documents.

Accordingly, it is an object of the present invention to provide a conversion apparatus for converting an HTML document containing a function that cannot be converted to an MHEG object to an MHEG document.

### SUMMARY OF THE INVENTION

In order to achieve the above-noted object, the present invention has the following technical constitution.

Specifically, a first aspect of the present invention is a conversion apparatus for converting an HTML (Hypertext Markup Language) document to an MHEG (Multimedia and Hypermedia Expert Group) document, wherein the conversion apparatus comprising a conversion means 207 for converting the HTML document having one or more tags, stylesheet coding, or scripts to the MHEG document having one or more MHEG objects.

In a second aspect of the present invention, the conversion means 207 having means 207a for converting a Script in the HTML document to an action in the MHEG document.

In a third aspect of the present invention, the conversion means 207 having means 207b for converting attribute for a style sheet in the HTML document to an MHEG object or an attribute of the MHEG object in the MHEG document.

In a forth aspect of the present invention, the conversion means 207 having means 207c for converting tag attribute in the HTML document to an MHEG object or an attribute of an MHEG object in the MHEG document.

### BRIEF DESCRIPTIONS OF THE DRAWINGS

Fig. 1 is a drawing showing an example of a code listing of an HTML 4.0 set document.
Fig. 2 is a drawing showing a listing of the coding in an MHEG-5 format document that converts the above-noted HTML 4.0 set format document using a conversion apparatus according to the present invention.
Fig. 3 is an image of the display resulting from these documents.
Fig. 4 is conversion table for attributes related to tags that represent a list according to the present invention.
Fig. 5 is a drawing showing a conversion table for converting an HTML 4.0 set to an MHEG document, with respect to CSS attributes, according to the present invention.
Fig. 6 is a drawing showing another conversion table for converting an HTML 4.0 set to an MHEG document, with respect to CSS attributes, according to the present invention.
Fig. 7 is a drawing showing a conversion table for converting an HTML 4.0 set to an MHEG document, with respect to tag attributes, according to the present invention.
Fig. 8 is a drawing showing a conversion table for converting an HTML 4.0 set to an MHEG document, with respect to tag attributes, according to the present invention.
Fig. 9 is a drawing showing a conversion table for converting an HTML 4.0 set to an MHEG document, with respect to JavaScript, according to the present invention.
Fig. 10 is a drawing showing a conversion table for converting an HTML 4.0 set to an MHEG document, with respect to JavaScript, according to the present invention.

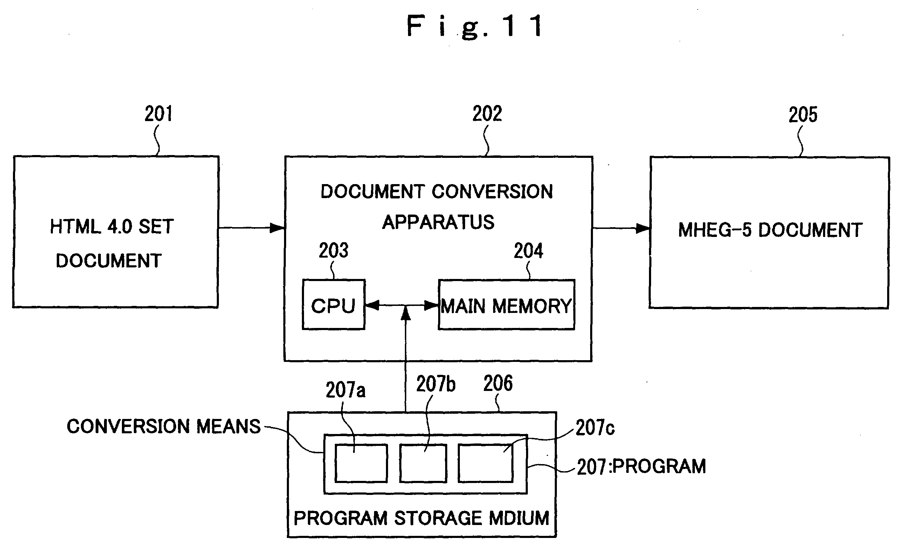

Fig. 11 is a block diagram showing a conversion apparatus according to the present invention.

### DETAILED DESCRIPTION OF THE PREFERRED EMBODIMENTS

The present invention will be described in terms of an embodiment for converting a list tag and associated CSS attribute and the like, with conversion for other tags and attributes being indicated in a table and described later.

The conversion steps for a list tag has three steps; a list conversion step, a conversion step for converting a CSS attribute object to perform list tag settings, and a conversion step for converting a dynamic action with respect to the list tag.

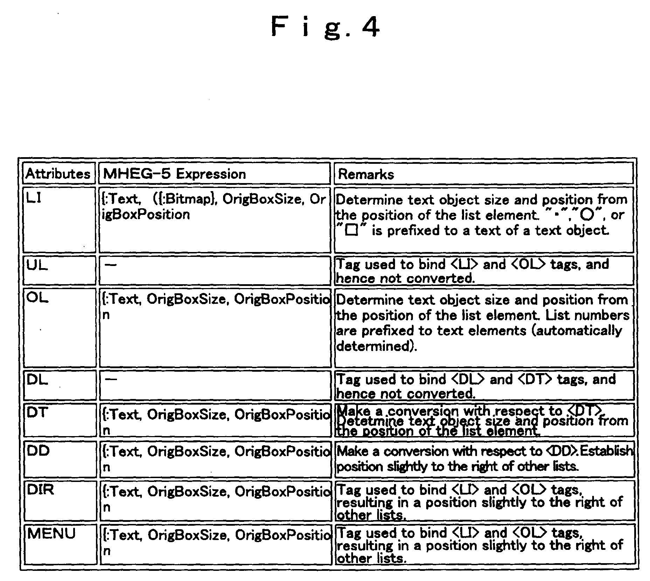

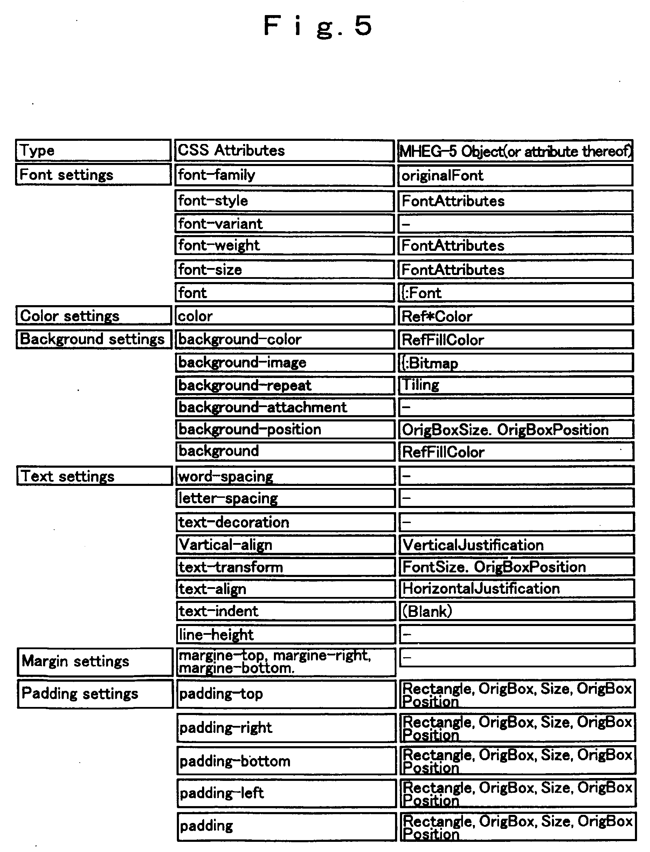

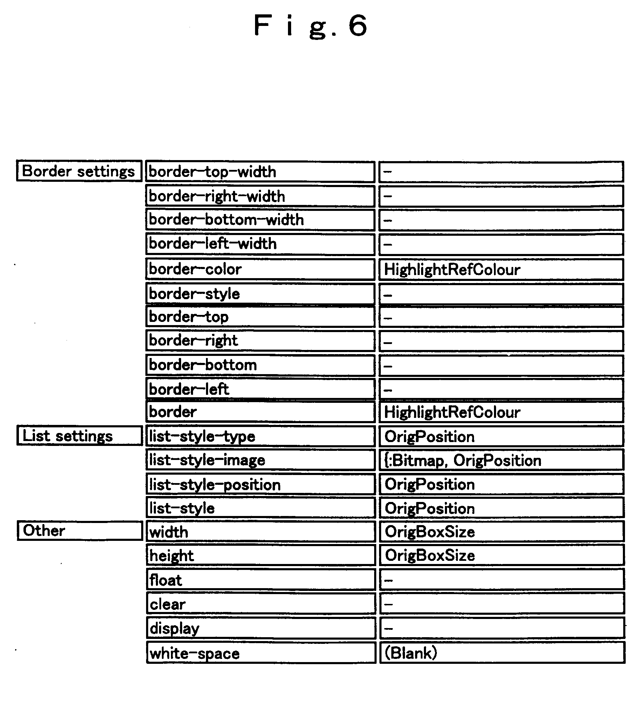

When performing the above, attributes associated with tags for representing a list are converted according to the rules shown in Fig. 4, and CSS attributes are converted according to the rules shown in Fig. 5 and Fig. 6 to MHEG-5 objects and attributes thereof.

In Fig. 4, the attributes column indicates list-related tags in HTML 4.0, the MHEG-5 expression column indicates names of MHEG-5 objects in an MHEG-5 document and the attributes thereof, and the remarks column indicates the method of conversion.

In Fig. 5 and Fig. 6, the CSS attributes column indicates the names of CSS attributes, the type column indicates the type of the attributes, and the MHEG-5 object (or attribute thereof) column indicates the MHEG-5 objects in an MHEG-5 document and the attributes thereof. The method for conversion according to the rules of Fig. 5 and Fig. 6 is valid for all tags, and even for tags other than list tags, such as table-related tags.

The specific method for converting list-related tags is described below.

In the list conversion step, the characters to be displayed from the content following the list related tags 〈DL〉, 〈DT〉, and 〈DD〉 are set as the OrigContent of a text object in an MHEG document. If a list element includes an image that cannot be displayed as text, however, the list text is converted to an MHEG-5 text object, and the image within the list is converted to a bit map object.

Referring to Fig. 4, the content sandwiched by 〈LI〉 tags is converted to a text object or bit map object. When converting objects, "·", "○" or "□" is prefixed to a text of a text object, as indicated in the table.

The values of OrigBoxSize in MHEG documents, which indicate box size, and the values of OrigBoxPosition in MHEG documents, which indicate display position, are determined by the left and right values and the font size and the like within the 〈DIV〉 tag in the HTML document. This is the CSS attribute object conversion step.

Because the 〈UL〉 tag establishes the list range, there is no object generated corresponding to this tag.

For a list tag 〈OL〉, a text object displaying sequential numbers is generated.

Because the 〈DL〉 tag defines the range of a list, there is no object generated corresponding to this tag.

Title text sandwiched by 〈DT〉 tags is converted to a text object.

The text having 〈DD〉 tags is converted to a text object.

Next, a JavaScript for imparting a dynamic effect to a list is described below, this dynamic effect being made by changes in the values of CSS attributes. The CSS attributes shown in Fig. 5 and Fig. 6 can all be changed by a JavaScript. A JavaScript that operates on CSS attributes is converted to an action coded as a link object in an MHEG document. This is the step of converting a dynamic action with respect to a list tag.

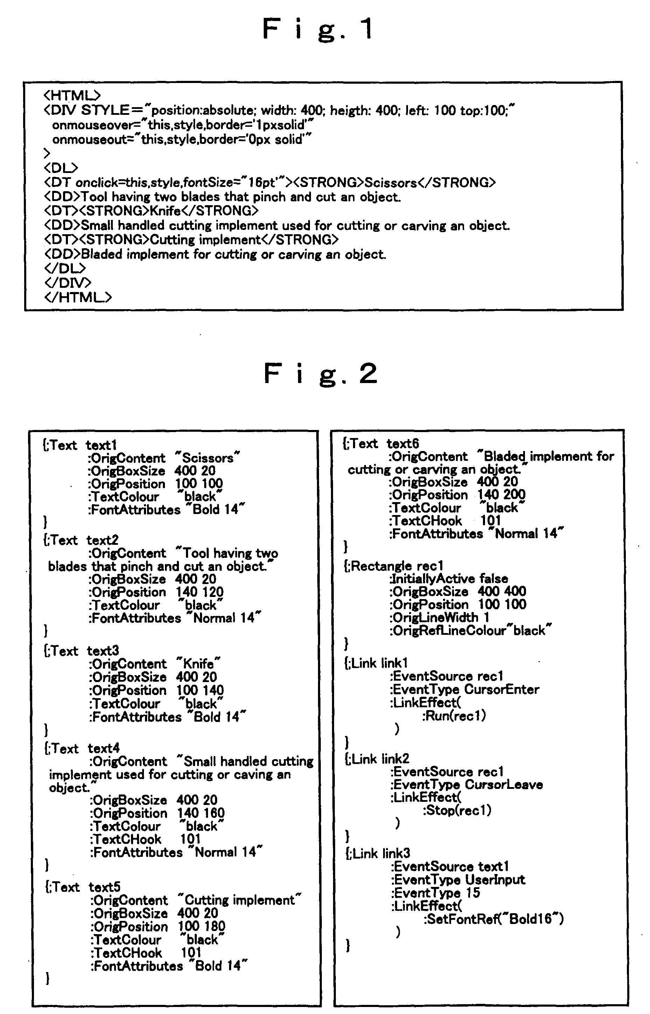

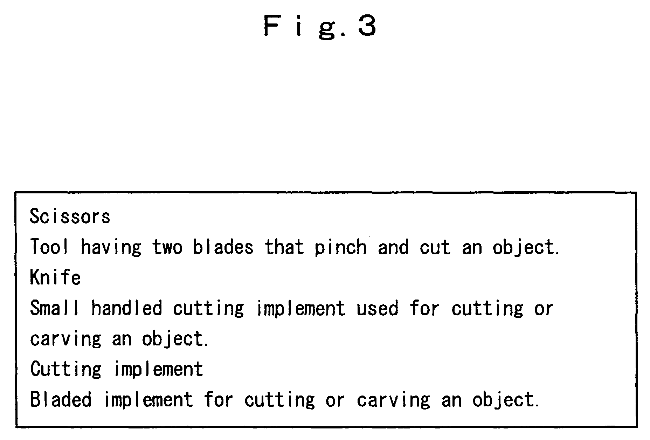

Fig. 1 shows an example of a list having dynamic effect in the HTML 4.0 document. Fig. 2 shows a listing of the coding in an MHEG-5 format document that results from conversion of the above-noted HTML 4.0 set format document using the conversion apparatus of the present invention. Fig. 3 is an image of the display resulting from these documents. In this example, the frame is displayed when a mouse pointer is within the frame and disappears when the mouse pointer is brought outside of the frame.

Text coded using 〈DT〉 and 〈DD〉 tags is converted to the OrgiContent of a text object in the MHEG document. The OrigBoxSize of the text object in the MHEG document is established by the width and the font size of the 〈DIV〉 tag in the HTML document. In this example, the default value is used for the font size in the HTML document. The OrigPosition is established by such factors as left, top, the font size within the tag, and the sequence within the list. The TextColor of the text object, because it cannot be specified by a tag, is black. The FontAttributes indicating the font size of the text object is the default value of 14 point. In the FontAttributes of the text objects text3 and text5 in the MHEG document, Bold is specified, corresponding to 〈STRONG〉 in the HTML document.

A rectangle object red is inserted in the MHEG document so as to correspond to the style attribute of the 〈DIV〉 tag in the HTML document. The associated OrigBoxSize in the MHEG document is established by the width and height of the 〈DIV〉 tag in the HTML document, and the OrigPosition in the MHEG document is established by the left and top of the 〈DIV〉 tag in the HTML document. The OrigLineWidth in the MHEG document is established as 1 pixel by
onmouseover="this.style.border='1px solid' " in the HTML document.

The associated OrigRefLineColour in the MHEG document is not set by a tag in the HTML document, and is black that is the default value.

The link object link1 is generated so as to correspond to
onmouseover="this.style.border='1px solid' " in the HTML document, the rectangle object rec1, that is, a rectangular frame, going into the display condition when the mouse pointer is within the region defined by the rectangle object rec1.

The link object link2 is generated so as to correspond to
onmouseout="this.style.border='0px solid' " in the HTML document, the rectangle object rec1 going into the non-display condition when the mouse pointer is brought outside the region defined by the rectangle object rec1.

The link object link3 is generated so as to correspond to
onclick="this.style.fontSize='16pt' " in the HTML document, and when the text object text1 is clicked, the font of text1 changes to Bold 16.

Referring to Fig. 1 and Fig. 2, the script
this.style.border='1px solid'
associated with onmouseover in the HTML document is converted to the action Run(rec1) associated with the link effect of link1 in the MHEG document, the script
this.style.border='0px solid'
associated with onmouseout in the HTML document is converted to the action stop(rec1) associated with the link effect of link2 in the MHEG document, and the script
this.style.fontSize='16pt'
associated with onclick in the HTML document is converted to the action SetFontRef("Bold16") associated with the link effect of link3 in the MHEG document.

Next, the table for conversion from the HTML 4.0 set to an MHEG document according to this embodiment of the present invention is described below.

Referring to Fig. 5 and Fig. 6, CSS attributes are converted to MHEG objects or attributes thereof in an MHEG document. For example, the CSS attribute "font-family" is converted to attribute "OriginalFont" in the MHEG object, and the CSS attribute "font" is converted to attribute "{:font" in the MHEG object as shown in Fig.5.

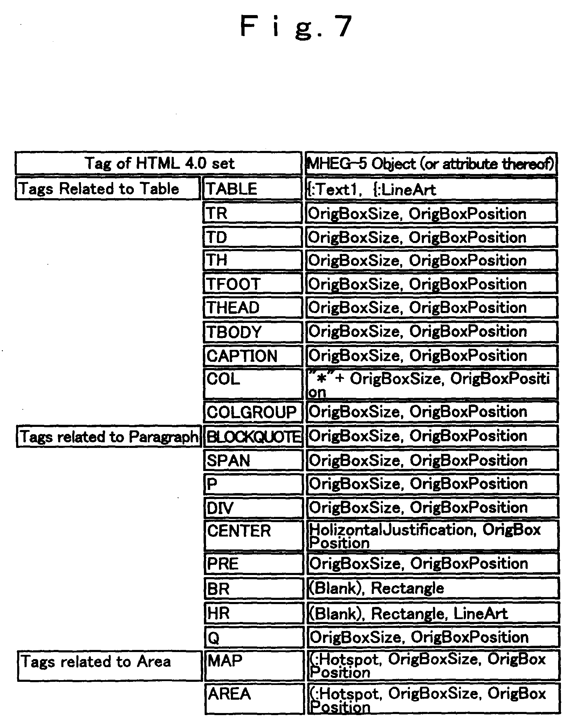

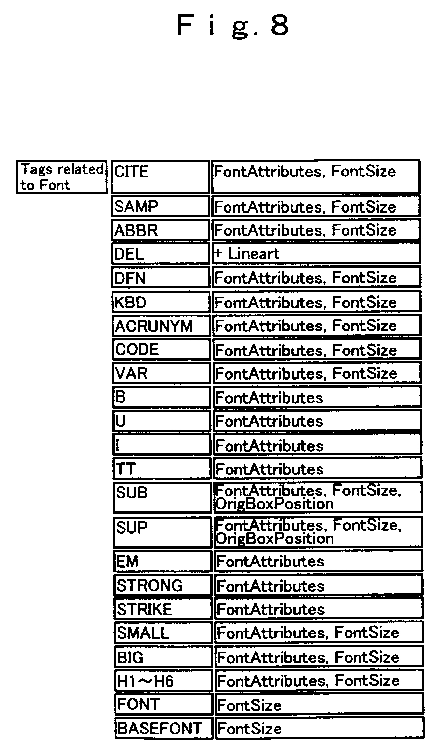

Fig. 7 and Fig. 8 are drawings showing the conversion table converting from HTML 4 .0 set tag attributes to an MHEG-5 objects.

Referring to Fig. 7 and Fig. 8, tag attributes are converted to MHEG objects or attributes thereof in an MHEG document. For example, the tag attribute "TABLE" is converted to the MHEG objects "[:Text" and "[:LineArt", and the tag attribute "TR" is converted to the MHEG object attributes "OrigBoxSize" and "OrigBoxPosition".

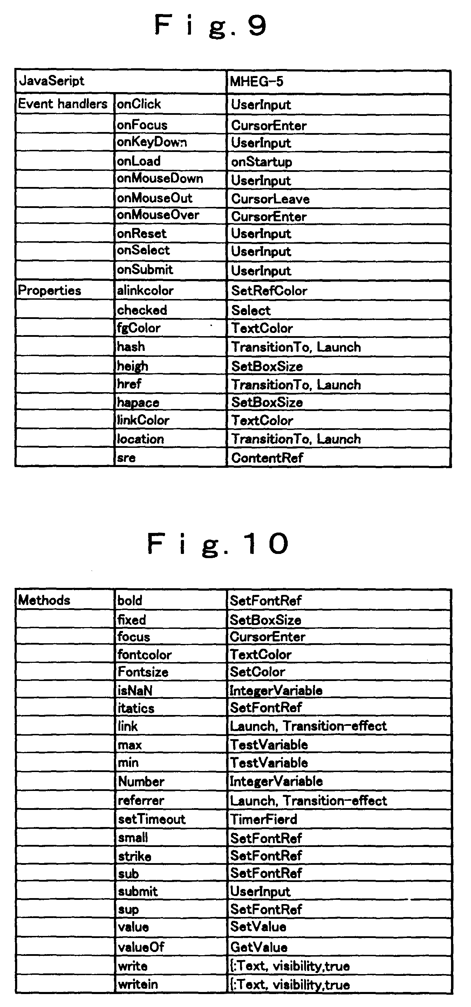

Fig. 9 and Fig. 10 show a conversion table converting from HTML 4.0 related to JavaScript to an MHEG document.

Referring to Fig. 9, an event handler coded in JavaScript is converted to an EventType of a link object in a MHEG document. Referring to Fig. 9, for example, an onclick event handler is converted to a EventType "UserInput".

Referring to Fig. 1 and Fig. 2, an onmouseover event handler is converted to an event type of "CursorEnter" of link1. An "EventSource" of the link1 is rec1, which corresponds to a 〈DIV〉 tag associated with onmouseover.

Returning to Fig. 9, the property of an object coded in JavaScript is converted to an action in an MHEG document, MHEG object, or attribute in the MHEG object. For example, the property "alinkcolor" is converted to the action "SetRefColor" in the MHEG document, and the property "fgColor" is converted to attribute "TextColor" of the MHEG object.

Referring to Fig. 10, the method of an object coded in a JavaScript is converted to an action in an MHEG document, an MHEG object, an MHEG object attribute, or an event type of a link object in an MHEG document. For example, the method "bold" is converted to the action "SetFontRef", the method "write" is converted to the MHEG object "[:Text" and "visibility:true", the method "fontcolor" is converted to the attribute "TextColor" of the MHEG object, and the method "submit" is converted to event type "UserInput" of the link object.

In the above-described embodiment, JavaScript is used as a script language in an HTML document, the present invention can be applied also to the case in which another script language, such as VBScript, Tc1 or the like is used.

Additionally, although in the above-noted embodiment CSS is used as a style sheet in the HTML document, the present invention can be applied also to the case in which another script language, such as XSL (eXtensible Stylesheet Language) is used.

The conversion apparatus 202 according to the present invention reads in from a program storage medium 206, such as a CD-ROM, and then the CPU 203 executes the program 207. When doing this, the CPU 203 usually loads the program 207 from the program storage medium 206 into a main memory 204, after which the program 207 is executed. A computer having a CPU 203 and a main memory 204 functions as a document converting apparatus, inputting an HTML 4.0 set document, converting the HTML 4.0 set document internally therein, and then outputting an MHEG-5 document.

The above-noted program can be generated as a text-format file which are coded interpreter-type commands, in this case, this program can be executed by an interpreter which reads in this program and executes commands.

According to the present invention, as described above, it is possible, from the HTML document, to generate the MHEG document that expresses the same image on a screen as does the HTML document.

## Claims

1. A conversion apparatus for converting an HTML (Hypertext Markup Language) document to an MHEG (Multimedia and Hypermedia Expert Group) document, wherein said conversion apparatus comprising a conversion means for converting an HTML document having one or more tags, stylesheet coding, or scripts to an MHEG document having one or more MHEG objects.

2. A conversion apparatus according to claim 1, wherein said conversion means having means for converting a script in an HTML document to an action in an MHEG document.

3. A conversion apparatus according to claim 1, wherein said conversion means having means for converting attribute for a style sheet in an HTML document to an MHEG object or attribute of an MHEG object in an MHEG document.

4. A conversion apparatus according to claim 1, wherein said conversion means having means for converting tag attribute in an HTML document to an MHEG object or attribute of an MHEG object in an MHEG document.
